# EUROPÄISCHE PATENTSCHRIFT

(11) **EP 4 257 436 B1**
(45) Veröffentlichungstag und Bekanntmachung des Hinweises auf die Patenterteilung: **29.01.2025**
(21) Anmeldenummer: 22000096.2
(22) Anmeldetag: 06.04.2022
(51) Int. Cl.: B60R 22/18, B60R 22/22, F16G 11/02

(54) **GURTSCHLOSSTRÄGER**
BELT LOCK CARRIER
PORTE-BOUCLE DE CEINTURE

(43) Veröffentlichungstag der Anmeldung: 11.10.2023
(73) Patentinhaber: SZW Prophet GmbH, 98694 Ilmenau / OT Gehren (DE)
(72) Erfinder: Prophet, Jörg, 98694 Ilmenau /OT Gehren (DE)
(74) Vertreter: Weihrauch, Frank

(56) Entgegenhaltungen:
- US-A- 4 915 451
- US-A1- 2020 384 945

## Beschreibung

Die Erfindung beschreibt einen Gurtschlossträger. Bei dem Gurtschlossträger handelt es sich um eine Baueinheit als Teil des Rückhaltesystems für Fahrzeuginsassen, das in Kraftfahrzeugen eingebaut wird, um das Gurtschloss des Sicherheitsgurtes an der Karosserie zu befestigen.

Der Stand der Technik beschreibt Gurtschlossträger in verschiedenen Ausführungen. Eine wichtige Anforderung an den Gurtschlossträger ist es, eine bestimmte Flexibilität aufzuweisen, um sich am Sitz in einem eingeschränkten Bereich bewegen zu können. Dies dient der Anpassung der Gurtführung an die Sitzposition und an einen idealen straffen Verlauf des Gurts, um Totbereiche beim Zurückhalten des menschlichen Körpers im Falle einer abrupten Verzögerung zu vermeiden oder zu reduzieren. Hierfür ist es aus dem Stand der Technik bekannt, Gurtschlossträger aus flexiblen Stahlseilen zu gestalten. Diese werden über verschiedene Varianten mit der Karosserie und dem Gurtschloss verbunden. Hierbei sind Lösungen bekannt, die Stahlseile der Gurtschlossträger als Schlaufe auszubilden. Die Seilenden können verschweißt, vercrimpt oder eingespleißt sein. Auch das Verpressen der Seilenden in einem Befestigungsblech wird angewendet. Der Nachteil der genannten Befestigungsmethoden ist eine örtliche Schwächung der Belastbarkeit durch negative Gefügeveränderung im Stahlseil des Gurtschlossträgers. Um hier ein Bauteilversagen zu vermeiden ist es nachteilig erforderlich, das Stahlseil und teilweise auch damit verbundene Komponenten größer zu dimensionieren. Dies bewirkt als Nachteil einen höheren Materialverbrauch und erhöht zudem unerwünscht die Fahrzeugmasse. Eine solche Schlaufenlösung beschreibt beispielsweise US 2020/384949 A1, wobei die Seilenden mittels einer aufgepressten Kappe gegen einen Auszug aus den Aufnahmekanälen eines Befestigungsblechs gesichert sind.

Aufgabe der Erfindung ist es, einen Gurtschlossträger bereitzustellen, der einfach und materialoptimiert herstellbar ist und zugleich eine hohe Belastbarkeit aufweist.

Die Aufgabe wird durch die im Patentanspruch 1 aufgeführten Merkmale gelöst. Bevorzugte Weiterbildungen ergeben sich aus den Unteransprüchen.

Der erfindungsgemäße Gurtschlossträger weist als Grundkomponenten einen Ankerkörper und einen Seilzug auf.

Der Ankerkörper weist eine Aufnahme und zwei beabstandete Seilzugdurchführungen auf.

Die Aufnahme des Ankerkörpers für eine Befestigung an einer Karosserie ausgebildet. Die Aufnahme kann beispielsweise als eine Bohrung ausgebildet sein, durch die der Ankerkörper mittels eines Befestigungselements in einem tragenden Teil der Karosserie in der Nähe des jeweiligen Sitzes vorzugsweise verschraubt oder in sonstiger Weise gekoppelt wird. Die Kopplung kann starr oder auch schwenkbar ausgebildet sein. Sie dient neben dem Gurtaufroller und der Gurtumlenköse als wichtiger Befestigungspunkt, um die Personenrückhaltekräfte bei einem Unfallereignis aufzunehmen und in die Karosserie abzulenken. Hierbei kann die Aufnahme in besonderen Ausführungen auch mit Biege- oder Verformungszonen aufgebaut sein, um bei einem Unfall dämpfend zu wirken. So wird die hohe Beschleunigung, die bei einem Unfallereignis auf den menschlichen Körper einwirkt, abgeschwächt.

Die beiden Seilzugdurchführungen sind so ausgebildet, dass die beiden Enden des Zugseils des Seilzugs dort aufgenommen und vorzugsweise auch dort durchgeführt werden können.

Der Seilzug weist zudem ein mehradriges Zugseil auf, das U-förmig ausgebildet ist und einen Bogenabschnitt aufweist. Der Bogenabschnitt bildet einen Schlaufenraum aus, der zur formschlüssigen Aufnahme eines Gurtschlosses ausgebildet ist. Das Gurtschloss selbst ist nicht Bestandteil der erfindungsgemäßen Vorrichtung und weist ein Gegenformabschnitt auf, der bei bestimmungsgemäßer Montage in dem Schlaufenraum angeordnet ist.

Der Seilzug bezeichnet die Gesamtheit der Baugruppe bestehend aus dem Zugseil und den beiden Zink-Druckguss-Nippeln.

Durch die Mehradrigkeit bleibt das Zugseil biegsam, sodass der Schlaufenraum ausgebildet werden kann. Der Schlaufenraum bietet ausreichende Möglichkeiten ein Gurtschloss einfach und sicher zu befestigen. Es ist keine weitere Umformung oder Bearbeitung notwendig. Dies erhöht die Zuverlässigkeit und Sicherheit, da kein weiteres Element in der Kraftübertragungskette benötigt wird.

Weiterhin weist der Seilzug einen ersten und einen zweiten Endabschnitt auf, wobei die Endabschnitte die Seilzugdurchführungen durchsetzen. Die Aufnahme des Seilzugs in den Seilzugdurchführungen des Ankerkörpers erfolgt somit lateral formschlüssig. Lateral bezeichnet hierbei die Lagefestlegung quer zu der Längsachse des Seilzugs in den Seilzugdurchführungen.

Der erste Endabschnitt weist einen ersten Zink-Druckguss-Nippel und der zweite Endabschnitt einen zweiten Zink-Druckgussnippel auf.

Erfindungsgemäß umschließen die Zink-Druckgussnippel jeweils ein gestauchtes Zugseilende. Durch das Angießen der Zink-Druckguss-Nippel mittels Zink-Druckguss-Verfahren an das Seilende werden mehrere vorteilhafte Wirkungen bereitgestellt. Zum einen ist aufgrund der hohen Viskosität der Zink-Schmelze ein hoher Grad an Formschluss mit dem Stahlseil erreichbar. Auch kleinste Konturen und Oberflächenabschnitte des mehradrigen Zugseils werden auf der gesamten umgossenen Seillänge erreicht. Dadurch ist die Fläche, auf die die am Seilzug wirkende Kraft übertragen wird, größtmöglich ausgebildet. Daher wird die Scherspannung an der Oberfläche zwischen dem Zugseil und Zink-Druckguss-Nippel minimiert, was eine hohe Kraftübertragung ermöglicht. Zum zweiten kann durch die Materialkombination zwischen verzinktem Stahlseiladern und Zink-Druckguss-Material ein gewisser Stoffschluss erreicht werden, was die Verbindung der beiden Komponenten wesentlich verbessert. Drittens besteht durch die Formgebung der Zugseilenden durch die Stauchung eine Formschlusskomponente bei einer Kraftübertragung zwischen dem Zugseil und dem Zink-Druckguss-Nippel.

Ferner überkragen die Zink-Druckguss-Nippel erfindungsgemäß die jeweils zugeordnete Seilzugdurchführung am Ankerkörper und bilden mittels einer bogenabschnittseitigen Ringfläche, die an einer nippelseitigen Gegenfläche des Ankerkörpers anliegt, einen axialen Formschluss zu dem Ankerkörper aus. Als axialer Formschluss wird hierbei ein Formschluss zur Lagefestlegung entlang der Längsachse des Seilzugs in den Seilzugdurchführungen in Belastungsrichtung im Falle eines Unfallereignisses verstanden. Die Planebenen der bogenabschnittseitigen Ringfläche der Zink-Druckguss-Nippel und der nippelseitigen Gegenfläche des Ankerkörpers sind im Wesentlichen quer zur Längsachse der Längsachse des Seilzugs angeordnet.

Die Montage des Gurtschlossträgers kann besonders vorteilhaft in einfacher Weise und besonders prozesssicher erfolgen. Der Seilzug wird beispielsweise mit den bereits angegossenen Zink-Druckguss-Nippeln in die noch aufgebogenen Seilzugdurchführungen des Ankerkörpers eingelegt. Danach werden diese zusammengebogen. Der Seilzug bleibt in einem bestimmten Bereich beweglich im Ankerkörper gelagert, kann aber nicht mehr herausgezogen werden. Auch bleibt der Seilzug im freien Bereich biegsam. Dadurch kann das Gurtschloss in einem bestimmten Bereich bewegt werden, was eine flexible Anpassung an Sitzposition und Gurtverlauf ermöglicht.

Es wurde überraschend gefunden, dass gegenüber dem Stand der Technik besonders vorteilhaft eine Erhöhung der Belastbarkeit, eine Minimierung der Gefahr eines Bauteilversagens sowie eine hohe Prozesssicherheit bei der Herstellung erreicht werden kann, indem bei der Befestigung der Zink-Druckgussnippel an den Zugseilenden schädigende Einflüsse auf das Zugseil durch kraft- oder hitzeeinbringende Verfahren vermieden werden. So entsteht insbesondere keine Gefügeveränderung des Stahls durch ungünstige Krafteinbringung, wie beim Crimpen oder Verstemmen. Der Nippel und das Stahlseil werden bei diesen Verfahren so ungünstig verformt, dass durch die Verformungsbedingungen Risse oder zu stark verfestigte Bereiche entstehen können. Durch die erfindungsgemäße Lösung werden dagegen mehrachsige Materialspannungen im Zugseil oder mögliche Kerbwirkungen vermieden. Aber auch eine ungünstige Hitzeeinbringung, wie etwa beim Schweißen, die ebenso zu einer Schädigung und ungünstigen Gefügeänderung im Material führt, wird vermieden. Vorteilhaft wird so ein Gurtschlossträger mit erhöhter Zuverlässigkeit und Qualität bereitgestellt, der zudem materialschonend ausgebildet werden kann.

Gemäß einer ersten vorteilhaften Weiterbildung ist der Gurtschlossträger dadurch gekennzeichnet, dass der Ankerkörper als Stanz-Biege-Teil ausgebildet ist und die Seilzugdurchführungen als ein biegegeformter Abschnitt des Ankerkörpers ausgebildet sind.

Durch Ausbildung des Ankerkörpers als Biegeteil ist dieser einfach und günstig herstellbar. Die Montage des Seilzugs mit dem Ankerkörper gestaltet sich zudem sehr einfach. Der Seilzug kann insbesondere mit bereits angegossenen Zink-Druckguss-Nippeln in die vorgebogenen Seilzugdurchführungen eingelegt werden. Im Anschluss werden die Seilzugdurchführungen zusammengebogen, sodass der Seilzug beweglich, aber nicht mehr trennbar mit dem Ankerkörper verbunden ist.

In einer anderen vorteilhaften Weiterbildung nach einem der vorhergehenden Ansprüche ist der Gurtschlossträger dadurch gekennzeichnet, dass das Zugseil als Stahlseil ausgebildet ist.

Das Stahlseil ist vorzugsweise als verdrilltes aus einzelnen Seilsträngen hergestelltes Zugseil ausgebildet. Das erhöht die mögliche Zugfestigkeit und erhält die Biegsamkeit des Seilzugs. Der Werkstoff Stahl bietet dazu eine ausreichende Elastizität bei erforderlicher Zugfestigkeit.

Die Erfindung wird als Ausführungsbeispiel anhand von
Fig. 1 schematische Schrägbilddarstellung des Gurtschlossträgers
Fig. 2 schematische Schnittansicht des Zink-Druckguss-Nippels näher erläutert.

Hierbei beziehen sich gleiche Bezugszeichen in den verschiedenen Figuren auf jeweils gleiche Merkmale oder Bauteile. Die Bezugszeichen werden in der Beschreibung auch dann verwandt, sofern sie in der betreffenden Figur nicht dargestellt sind.

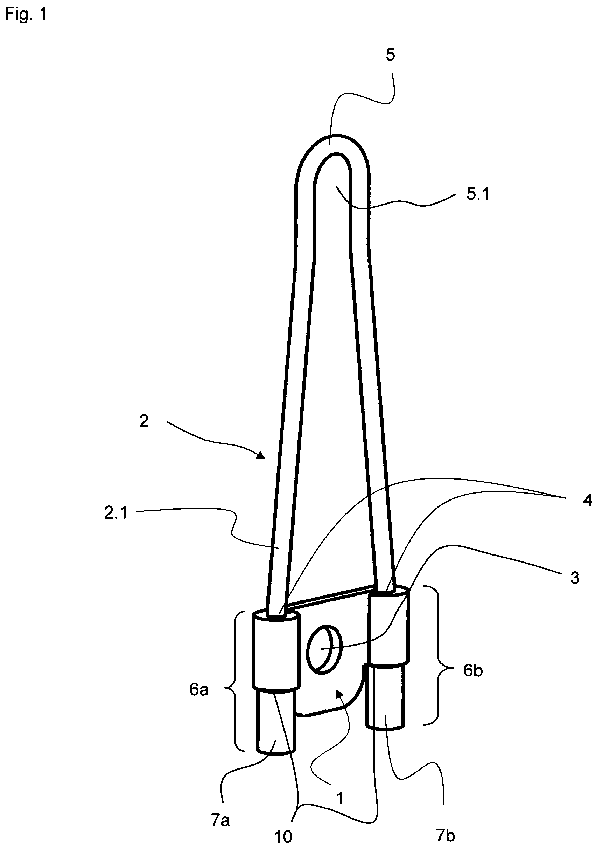

Die Figur 1 zeigt ein Ausführungsbeispiel eines Gurtschlossträgers in einer schematischen Schrägbilddarstellung.

Der Gurtschlossträger besteht aus dem Ankerkörper 1 und dem Seilzug 2.

Der Ankerkörper 1 weist eine Aufnahme 3 auf, die in diesem Ausführungsbeispiel als Bohrung ausgebildet ist. Damit wird der Gurtschlossträger mittels eines Befestigungselements an der Karosse befestigt. Weiter weist der Ankerkörper 1 die Seilzugdurchführungen 4 auf, die hier beidseits der Aufnahme 3 angeordnet sind. In den Seilzugdurchführungen 4 wird das Zugseil 2.1 des Seilzug 2 des Gurtschlossträgers geführt und mit dem ersten und zweiten Endabschnitt 6a, 6b aufgenommen. Der Seilzug 2 ist U-förmig angeordnet und bildet gegenüber dem Ankerkörpers 1 liegend den Bogenabschnitt 5 aus, der den Schlaufenraum 5.1 umgrenzt. Darin wird das Gurtschloss befestigt. Damit der Seilzug 2 nicht aus dem Ankerkörper 1 herausgezogen werden kann, sind an den Endabschnitten 6a, 6b die Zink-Druckguss-Nippel 7a, 7b angebracht. Diese bilden ein formschlüssiges Rückhalteelement. So kann die Rückhaltekraft des Anschnallgurtes über das Gurtschluss und den Gurtschlossträger in die Karosserie abgeleitet werden.

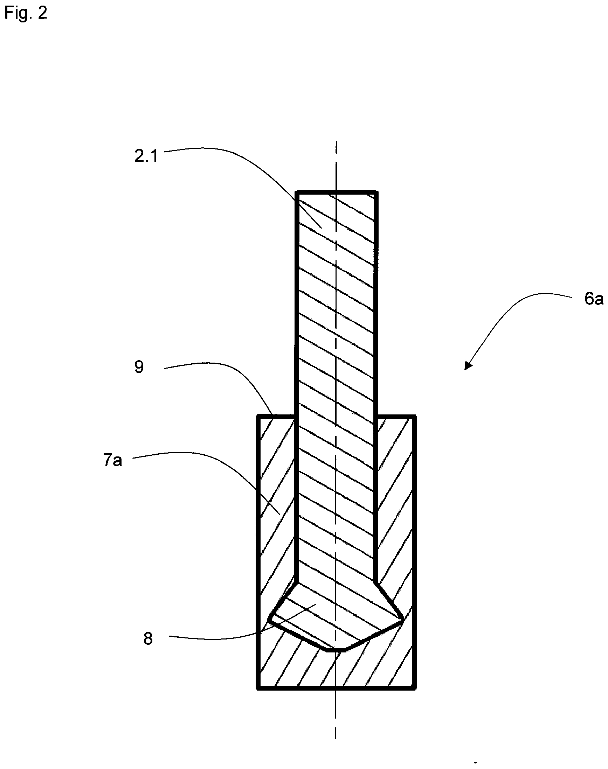

Die Figur 2 zeigt eine Schnittdarstellung der Endabschnitte am Beispiel des ersten Endabschnitts 6a des Seilzugs 2. Am Endabschnitt 6a ist das Seilzugende 8 angestaucht. Das angestauchte Seilzugende 8 stellt einen Formschluss mit dem Zink-Druckgusskörper des Zink-Druckguss-Nippels 7a bereit. Der Zink-Druckguss-Nippel 7a bildet eine bogenabschnittsseitige Ringfläche 9 aus. Diese bildet mit der Gegenfläche 10 des Ankerkörpers 1 an der zugeordneten Seilzugdurchführung 4 einen axialen Formschluss aus. So ist der Zink-Druckguss-Nippel 7a unlösbar mit dem Seilzug 2 verbunden und kann die Kraft des Seilzugs 2 an das Ankerelement 1 übertragen.

### Verwendete Bezugszeichen

- 1: Ankerkörper
- 2: Seilzug
- 2.1: Zugseil
- 3: Aufnahme
- 4: Seilzugdurchführungen
- 5: Bogenabschnitt
- 5.1: Schlaufenraum
- 6a: erster Endabschnitt
- 6b: zweiter Endabschnitt
- 7a: erster Zink-Druckguss-Nippel
- 7b: zweiter Zink-Druckguss-Nippel
- 8: gestauchtes Zugseilende
- 9: bogenabschnittsseitige Ringfläche
- 10: nippelseitige Gegenfläche

## Patentansprüche

1. Gurtschlossträger,
aufweisend einen Ankerkörper (1) und einen Seilzug (2),
wobei der Ankerkörper (1) eine Aufnahme (3), die für eine Befestigung an einer Karosserie ausgebildet ist, und zwei beabstandete Seilzugdurchführungen (4) aufweist,
wobei der Seilzug (2) ein mehradriges Zugseil (2.1) aufweist, das U-förmig ausgebildet ist und das einen Bogenabschnitt (5) aufweist, der einen Schlaufenraum (5.1) ausbildet, der zur formschlüssigen Aufnahme (3) eines Gurtschlosses ausgebildet ist und wobei der Seilzug (2) einen ersten Endabschnitt (6a) und einen zweiten Endabschnitt (6b) aufweist, wobei die Endabschnitte (6a, 6b) die Seilzugdurchführungen (4) durchsetzen, **dadurch gekennzeichnet,**
**dass** der erste Endabschnitt (6a) einen ersten Zink-Druckguss-Nippel (7a) und der zweite Endabschnitt (6b) einen zweiten Zink-Druckguss-Nippel (7b) aufweist, dass die Zink-Druckguss-Nippel (7a, 7b) jeweils ein gestauchtes Zugseilende (8) umschließen und dass die Zink-Druckguss-Nippel (7a, 7b) die jeweils zugeordnete Seilzugdurchführung (4) überkragen und mittels einer bogenabschnittsseitigen Ringfläche (9), die an einer nippelseitigen Gegenfläche (10) des Ankerkörpers (1) anliegt, einen axialen Formschluss zu dem Ankerkörper (1) ausbilden.

2. Gurtschlossträger nach Anspruch 1,
**dadurch gekennzeichnet,**
**dass** der Ankerkörper (1) als Stanz-Biege-Teil ausgebildet ist und die Seilzugdurchführungen (4) als ein biegegeformter Abschnitt des Ankerkörpers (1) ausgebildet sind.

3. Gurtschlossträger nach Anspruch 1 und 2,
**dadurch gekennzeichnet,**
**dass** das Zugseil als ein Stahlseil ausgebildet ist.

## Claims

1. A safety belt buckle supporting member,
comprising an anchor body (1) and a cable pull (2),
wherein the anchor body (1) has an intake (3), which is designed for its fastening to a body, and two cable pull grommets (4), which are spaced apart from each other,
wherein the cable pull (2) comprises a multi-wire pull cable (2.1) which is U-shaped and has an arc section (5), which forms a loop space (5.1) designed for the form-fit intake (3) of a safety belt buckle, and wherein the cable pull (2) has a first end section (6a) and a second end section (6b), wherein the end sections (6a, 6b) pass through the cable pull grommets (4), **characterized in**
**that** the first end section (6a) comprises a first zinc diecast nipple (7a) and the second end section (6b) comprises a second zinc diecast nipple (7b), that the zinc diecast nipples (7a, 7b) each enclose a compressed pull cable end (8), and that the zinc diecast nipples (7a, 7b) project beyond the respectively associated cable pull grommets (4) and form an axial form fit to the anchor body (1) by means of an arc-section-sided annular surface (9) which rests against a nipple-sided mating surface (10) of the anchor body (1).

2. The safety belt buckle supporting member according to claim 1,
**characterized in**
**that** the anchor body (1) is designed as a punched-bent part and the pull cable grommets (4) are designed as a bent-formed section of the anchor body (1).

3. The safety belt buckle supporting member according to claims 1 and 2,
**characterized in**
**that** the pull cable is designed as a steel cable.

## Revendications

1. Support de boucle de ceinture,
comprenant un corps d'ancrage (1) et un câble de traction (2),
où le corps d'ancrage (1) présente un logement (3) qui est conçu pour une fixation à une carrosserie et comprend deux passages de câble (4) espacés, où le câble de traction (2) présente un câble de traction (2.1) multifilaire, qui est réalisé en forme de U et qui présente un tronçon arqué (5) qui forme un espace de boucle (5.1) qui est réalisé pour recevoir par complémentarité de forme (3) une boucle de ceinture et où le câble de traction (2) présente une première section d'extrémité (6a) et une première section d'extrémité (6b), les sections d'extrémité (6a, 6b) traversant les passages de câble (4), est **caractérisé en ce**
**que** la première section d'extrémité (6a) présente un premier embout en zinc moulé sous pression (7a) et la deuxième section d'extrémité (6b) un deuxième embout en zinc moulé sous pression (7b), en ce que les embouts en zinc moulé sous pression (7a, 7b) entourent chacun une extrémité de câble de traction (8) comprimée et en ce que les embouts en zinc moulé sous pression (7a, 7b) dépassent du passage de câble (4) respectivement associé et forment une liaison axiale par la forme avec le corps d'ancrage (1) au moyen d'une surface annulaire (9) située du côté du tronçon arqué, qui s'applique contre une surface opposée (10) du corps d'ancrage (1) située du côté de l'embout.

2. Support de boucle de ceinture suivant la revendication 1
est **caractérisé en ce**
**que** le corps d'ancrage (1) est réalisé sous la forme d'une pièce découpée et pliée et que les passages de câble (4) sont réalisés sous la forme d'une section formée par pliage du corps d'ancrage (1).

3. Support de boucle de ceinture suivant les revendications 1 et 2
est **caractérisé en ce**
**que** le câble de traction est réalisé sous la forme d'un câble en acier.
